# EUROPÄISCHE PATENTSCHRIFT

(11) **EP 2 720 833 B1**
(45) Veröffentlichungstag und Bekanntmachung des Hinweises auf die Patenterteilung: **21.02.2018**
(21) Anmeldenummer: 12721205.8
(22) Anmeldetag: 26.04.2012
(51) Int. Cl.: B25F 5/02, F16B 33/00

(54) **WERKZEUGMASCHINENVORRICHTUNG**
MACHINE TOOL DEVICE
DISPOSITIF DE MACHINE-OUTIL

(30) Priorität: 16.06.2011 DE 102011077622
(43) Veröffentlichungstag der Anmeldung: 23.04.2014
(73) Patentinhaber: Robert Bosch GmbH, 70442 Stuttgart (DE)
(72) Erfinder: YEOH, Sim Teik, Penang 11700 Gelugor (MY); ABD, Raman Khiri, Kedah 08000 (MY); NG, Chin Aun, Penang 11900 (MY)
(86) Internationale Anmeldenummer: PCT/EP2012/057663
(87) Internationale Veröffentlichungsnummer: WO 2012/171702

(56) Entgegenhaltungen:
- EP-A2- 2 062 700
- DE-A1- 3 320 429
- DE-A1- 19 824 068
- DE-A1-102008 000 613
- DE-A1-102009 015 435
- US-A- 3 476 960
- US-A- 4 474 077
- US-A- 5 006 740
- US-A1- 2007 295 521

## Beschreibung

### Stand der Technik

Es sind bereits Handwerkzeugmaschinen bekannt, bei welchen ein metallenes Getriebegehäuse mittels Schrauben mit einer Abdeckkappe formschlüssig verbunden ist. Beispiele im Stand der Technik sind aus der DE102008000613A1, US3476960A1, EP2062700A2 oder DE19824068A1 bekannt.

### Offenbarung der Erfindung

Die Erfindung geht aus von einer Werkzeugmaschinenvorrichtung, wie im Anspruch 1 dargestellt, mit zumindest einer Schraube, die dazu vorgesehen ist, zumindest ein Metallbauteil und zumindest ein weiteres Bauteil formschlüssig aneinander zu befestigen.
Es wird eine elektrische Isoliereinheit vorgeschlagen, die dazu vorgesehen ist, eine Stromleitung zumindest zwischen dem Metallbauteil und der Schraube zu verhindern. Unter einer "elektrischen Isoliereinheit" soll insbesondere eine Einheit verstanden werden, die eine elektrische Leitfähigkeit kleiner als 10⁻¹⁰ S/cm aufweist. Hierdurch kann insbesondere vermieden werden, dass bei einem Stromfluss durch ein Werkzeug, dem die Werkzeugmaschinenvorrichtung zugeordnet ist, beispielsweise aufgrund einer Beschädigung eines stromführenden Leiters durch das Werkzeug, elektrischer Strom von dem Werkzeug über das Metallbauteil und die Schraube zu einem Benutzer geleitet wird, wodurch eine Gefährdung des Benutzers durch einen Stromschlag vermieden werden kann.
Ferner wird vorgeschlagen, dass das Metallbauteil von einem innenliegenden Metallgehäuse gebildet ist. Unter einem "innenliegenden Metallgehäuse" soll insbesondere ein als Gehäuse ausgebildetes Bauteil der Werkzeugmaschinenvorrichtung verstanden werden, welches aus einem Metall hergestellt ist und in einem montierten Zustand der Werkzeugmaschinenvorrichtung durch umliegende Bauteile, insbesondere durch umliegende Gehäuseteile, zumindest zum Großteil und vorzugsweise vollständig umschlossen ist und somit außerhalb eines möglichen Kontaktbereichs eines Benutzers liegt. Es kann vorteilhaft vermieden werden, dass ein elektrischer Stromfluss von einem Inneren der Werkzeugmaschinenvorrichtung in einen äußeren, von dem Benutzer berührbaren Bereich der Werkzeugmaschine erfolgen kann, welcher den Benutzer gefährden kann.

Ferner wird vorgeschlagen, dass die elektrische Isoliereinheit zumindest eine elektrisch isolierende Oberflächenbeschichtung umfasst. Unter einer "Oberflächenbeschichtung" soll insbesondere eine Materialschicht verstanden werden, die eine Oberfläche eines Elements bildet, die von einem Hauptkörper des Elements verschieden ist und deren Materialstärke gering im Vergleich zu einer Materialstärke des ganzen Elements ist. Darunter, dass "die Materialstärke der Materialschicht gering ist im Vergleich zu einer Materialstärke des Elements" soll insbesondere verstanden werden, dass die Materialstärke der Materialschicht einen Wert aufweist, der maximal 5 Prozent, vorteilhaft maximal 1 Prozent und vorzugsweise maximal 0,1 Prozent eines Werts der Materialstärke des Elements aufweist. Unter einer "elektrisch isolierenden" Oberflächenbeschichtung soll insbesondere eine Oberflächenbeschichtung verstanden werden, die eine elektrische Leitfähigkeit kleiner als 10⁻¹⁰ S/cm aufweist. Es kann vorteilhaft eine kostengünstige und konstruktiv einfache elektrische Isoliereinheit erhalten werden. Vorzugsweise weist die zumindest eine Schraube die elektrische isolierende Oberflächenbeschichtung auf. Es können somit vorteilhaft insbesondere handelsübliche Schrauben mit einer Beschichtung überzogen werden, wodurch Kosten eingespart werden können. Ferner kann vorteilhaft insbesondere bei einer Beschädigung der elektrisch isolierenden Oberflächenbeschichtung einfach eine Ersetzung der Schraube durchgeführt werden, wodurch vorteilhaft Kosten, Zeit und Aufwand gespart werden können. Grundsätzlich ist jedoch ebenfalls möglich, dass das Metallbauteil und/oder das weitere Bauteil die elektrisch isolierende Oberflächenbeschichtung aufweisen. Ferner kann durch die Ausbildung als Oberflächenbeschichtung eine Isoliereinheit für eine Werkzeugmaschinenvorrichtung erreicht werden, bei der auf eine konstruktive Umgestaltung der Werkzeugmaschinenvorrichtung verzichtet werden kann. Grundsätzlich ist es ebenfalls möglich, alternativ zu einer elektrisch isolierenden Oberflächenbeschichtung der Schrauben vollständig aus Isoliermaterial bestehende Schrauben zu verwenden.

Ferner wird vorgeschlagen, dass die Oberflächenbeschichtung aus einem elektrolytisch aufgebrachten nichtleitenden Material besteht. Unter einem "elektrolytisch aufgebrachten nichtleitenden Material" soll insbesondere ein Material verstanden werden, welches einen elektrischen Nichtleiter darstellt und mittels einer Elektrolyse auf einem Substrat, beispielsweise einer Schraube, aufgebracht wird. Unter einem "nichtleitenden Material" soll insbesondere ein Material verstanden werden, das eine elektrische Leitfähigkeit kleiner als 10⁻¹⁰ S/cm aufweist. Es kann eine widerstandsfähige Schicht erhalten werden, welche insbesondere eine hohe Kratzfestigkeit aufweist. Hierdurch kann insbesondere vorteilhaft verhindert werden, dass durch eine Beschädigung der Oberflächenbeschichtung eine leitende Verbindung über die Schraube entsteht, welche eine Stromschlaggefahr darstellt.

Ferner wird vorgeschlagen, dass die zumindest eine Schraube einen glatten Teilbereich umfasst. Unter einem "glatten Teilbereich" soll insbesondere ein Bereich der Schraube verstanden werden, welcher frei von einem Gewinde ist und welcher sich zumindest über 10 Prozent, vorteilhaft zumindest über 20 Prozent und bevorzugt zumindest über 30 Prozent einer Längserstreckung der Schraube erstreckt sowie maximal über 90 Prozent, vorteilhaft maximal über 80 Prozent und bevorzugt über maximal 60 Prozent der Längserstreckung der Schraube erstreckt. Es kann vorteilhaft erreicht werden, dass ein Abstand von einem Schraubenende, das von dem Benutzer berührt werden kann, und einem Bauteil vergrößert werden kann. Weiterhin kann vorteilhaft eine Beschädigung der Beschichtung in einem von dem Benutzer im verschraubten Zustand berührbaren Bereich der Schraube während eines Einschraubvorgangs der Schraube vermieden werden.

Ferner wird vorgeschlagen, dass der glatte Teilbereich an einen Schraubenkopf angrenzt. In einer Schraubverbindung ist der Schraubenkopf in der Regel an einem von dem Benutzer berührbaren Bereich angebracht. Es kann vorteilhaft der von dem Benutzer berührbare Bereich vor einer Beschädigung der Beschichtung geschützt und eine Stromschlaggefahr für den Benutzer vermieden werden.

Ferner wird vorgeschlagen, dass die elektrische Isoliereinheit zumindest ein zusätzliches Isolierelement umfasst, das dazu vorgesehen ist, zwischen der Schraube und dem Metallbauteil angeordnet zu werden. Unter einem "zusätzlichen Isolierelement" soll insbesondere ein Isolierelement verstanden werden, welches ein von der Schraube und dem Metallbauteil verschiedenes Element bildet. Vorzugsweise ist das zusätzliche Isolierelement dazu vorgesehen, zwischen dem glatten Teilbereich und dem Metallbauteil angeordnet zu werden. Dies kann beispielsweise durch eine Umhüllung des glatten Bereichs mit einem Schrumpfschlauch oder mit einer Manschette aus einem nichtleitenden Material geschehen. Grundsätzlich sind jedoch auch alternative Ausgestaltungen des zusätzlichen Isolierelements denkbar, beispielsweise eine aus einem Nichtleiter, beispielsweise einem Plastikwerkstoff, hergestellte Auskleidung eines Schraublochs in dem Metallbauteil. Es kann durch die zusätzliche Isolierschicht die Sicherheit des Benutzers vorteilhaft weiter erhöht und die Stromschlaggefahr für den Benutzer vermieden werden.

Ferner wird zumindest eine Isolierrippe, die in einem zu einer Aufnahme der Schraube vorgesehenen Schraubloch in dem Metallbauteil angeordnet ist, vorgeschlagen. Unter einer "Isolierrippe" soll insbesondere ein aus einem nichtleitenden Material hergestellter Körper verstanden werden, welcher dazu vorgesehen ist, als Abstandshalter zwischen der Schraube und dem Metallbauteil zu dienen. Vorzugsweise ist die Isolierrippe aus einem nichtleitenden Kunststoff gefertigt. Vorzugsweise ist die Isolierrippe als zylinderförmiger Körper mit einer Lochung, durch die die Schraube durchgeführt werden kann, ausgeführt. In einer bevorzugten Gestaltungsform ist die Isolierrippe einstückig mit dem weiteren Bauteil ausgeführt und als vorspringender Bereich des weiteren Bauteils ausgebildet. Es kann eine zusätzliche isolierende Schicht zwischen der Schraube und dem Bauteil erreicht werden, wodurch eine Sicherheit des Benutzers vorteilhaft weiter erhöht werden kann.

Ferner wird vorgeschlagen, dass das Metallbauteil von einem Getriebegehäuse und das weitere Bauteil von einer Abdeckkappe gebildet ist. Es kann somit vorteilhaft erreicht werden, dass insbesondere ein Stromfluss über ein metallenes Getriebegehäuse, welches in leitendem Kontakt mit dem Werkzeug steht, zu einer außen an einer Abdeckkappe angeordneten und von dem Benutzer berührbaren Schraube sicher vermieden werden kann. Es kann somit eine geringe Stromschlaggefährdung des Benutzers erreicht werden.

Des Weiteren wird eine tragbare Werkzeugmaschine, insbesondere eine Handwerkzeugmaschine, mit einer erfindungsgemäßen Werkzeugmaschinenvorrichtung vorgeschlagen.

Ferner wird vorgeschlagen, dass die tragbare Werkzeugmaschine ein Winkelgetriebe umfasst. Die tragbare Werkzeugmaschine ist beispielsweise als Winkelschleifer, als Stichsäge und/oder besonders vorteilhaft als oszillierende Handwerkzeugmaschine ausgebildet, bei denen über das Winkelgetriebe auch eine Drehbewegung in eine oszillierende hin- und hergehende Bewegung umgewandelt wird. Bei einer Handhabung einer solchen tragbaren Werkzeugmaschine ist häufig eine Berührung der tragbaren Werkzeugmaschine an äußeren Bereichen außerhalb speziell dafür vorgesehener Führungsbereiche erforderlich, wodurch eine hohe Berührungswahrscheinlich für Schrauben besteht, insbesondere für Schrauben die ein innenliegendes Metallbauteil mit einem außenliegenden Gehäusebauteil verbinden.

Es zeigen:
- Fig. 1: eine Handwerkzeugmaschine mit einem oszillierenden Werkzeug,
- Fig. 2: eine schematische Detailansicht einer erfindungsgemäßen Isoliereinheit in einem Schnittbild und
- Fig. 3: ein schematisches Schnittbild durch eine erfindungsgemäße Schraube.

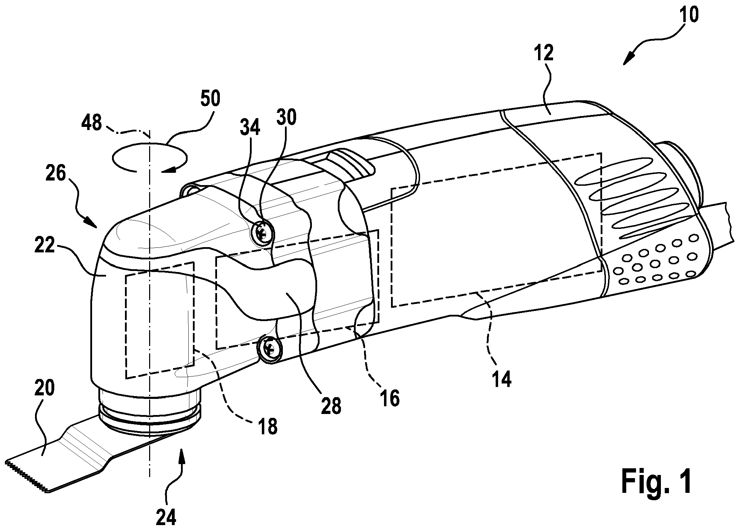

Figur 1 zeigt eine Handwerkzeugmaschine 10 mit einem oszillierenden Werkzeug 20, welches in einer Werkzeugaufnahme 24 angeordnet ist. Ein Gehäuse 12 der Handwerkzeugmaschine 10 umschließt eine Elektromotoreinheit 14 und eine ein Winkelgetriebe umfassende Getriebeeinheit 16. Über die Getriebeeinheit 16 und eine Abtriebseinheit 18 wird eine Drehbewegung der Elektromotoreinheit 14 auf das Werkzeug 20 übertragen. Insbesondere wird die Drehbewegung umgelenkt und das Werkzeug 20 in eine oszillierende Arbeitsbewegung in eine Umfangsrichtung 50 um eine Rotationsachse 48 versetzt.

Mittels vier gleichartiger Schrauben 30, die in gleichmäßig in Umfangsrichtung um die Handwerkzeugmaschine 10 verteilten Schraublöchern 52 angeordnet sind, ist eine Abdeckkappe 22 an dem Gehäuse 12 formschlüssig befestigt. Die Abdeckkappe 22 bildet eine Bedieneinheit 26, welche dazu vorgesehen ist, von einem Benutzer zu einer Führung der Handwerkzeugmaschine 10 ergriffen zu werden. Hierzu ist insbesondere ein an der Bedieneinheit 26 angeordneter Bedienhebel 28 vorgesehen. Insbesondere bei einem Einsatz der Handwerkzeugmaschine 10 in räumlich beengten Verhältnissen kann der Benutzer für eine genaue Führung der Handwerkzeugmaschine 10 die Bedieneinheit 26 auch an einem anderen Bereich als dem Bedienhebel 28 durch den Benutzer ergreifen und führen.

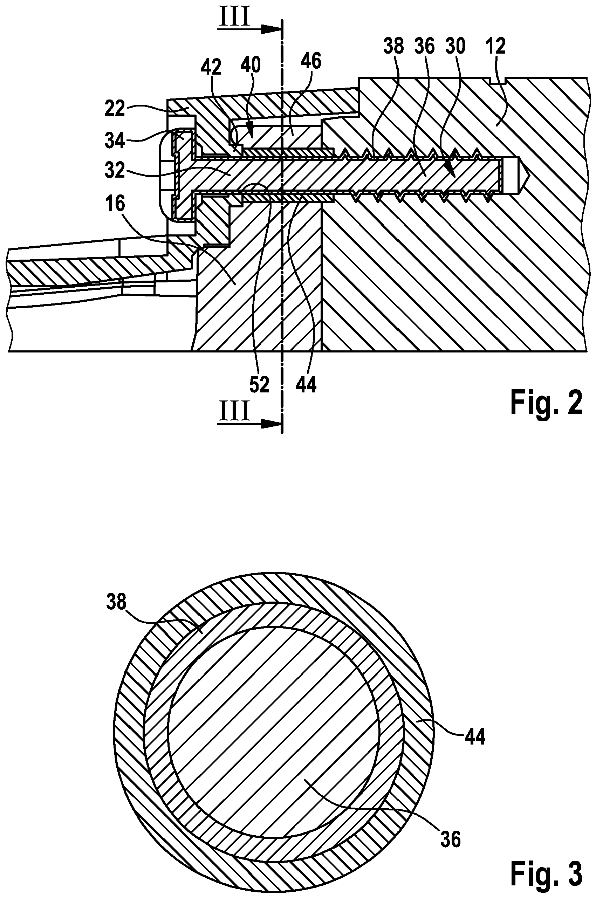

Die Getriebeeinheit 16 weist ein innenliegendes metallenes Gehäuse in Form eines Getriebegehäuses 46 auf, welches von der Abdeckkappe 22 und dem Gehäuse 12 umschlossen ist und ein innenliegendes Bauteil der Handwerkzeugmaschine 10 darstellt. Das Getriebegehäuse 46 ist formschlüssig mit der Abdeckkappe 22 und dem Gehäuse 12 verbunden. Hierzu ist jeweils eine Schraube 30 in eines der vier Schraublöcher 52, die sich von der Abdeckkappe 22 durch das Getriebegehäuse 46 bis in das Gehäuse 12 erstrecken, eingeführt (vgl. Figur 2). Ein Durchmesser des Schraublochs 52 ist so bemessen, dass die Schraube 30 samt zusätzlicher Elemente einer elektrischen Isoliereinheit 40 in das Schraubloch 52 spielfrei eingebracht werden kann. Das Gehäuse 12 weist im Bereich des Schraublochs 52 ein Gewinde auf, das dazu vorgesehen ist, mit einem Außengewinde der Schraube 30 zusammenzuwirken, um eine formschlüssige Verbindung zwischen Abdeckkappe 22, Getriebegehäuse 46 und Gehäuse 12 zu erreichen. Die Schraube 30 umfasst einen Schraubenkopf 34, an den sich ein zylinderförmiger Schraubenkörper anschließt. Der Schraubenkörper umfasst einen glatten Teilbereich 32 und einen ein Außengewinde aufweisenden Bereich. Der glatte Teilbereich 32 erstreckt sich über 45 Prozent einer Gesamtlänge des Schraubenkörpers. In einem verschraubten Zustand der Schraube 30 liegt der Schraubenkopf 34 in einer Vertiefung der Abdeckkappe 22 außen an der Handwerkzeugmaschine 10 an, wo er vor einer Berührung durch den Benutzer teilweise geschützt ist.

Die elektrische Isoliereinheit 40 ist dazu vorgesehen, einen Stromfluss zwischen dem innenliegenden metallenen Getriebegehäuse 46 über die Schraube 30 zu verhindern. Die elektrische Isoliereinheit 40 umfasst eine elektrisch isolierende Oberflächenbeschichtung 38 der Schraube 30, welche aus einer elektrolytisch aufgebrachten Beschichtung aus einem nichtleitenden Material besteht. Der glatte Teilbereich 32 ist von einem zusätzlichen Isolierelement 44 in Form eines Schrumpfschlauchs umgeben, das zwischen der Schraube 30 und dem Getriebegehäuse 46 angeordnet ist. Der Schrumpfschlauch wurde mittels Hitzebehandlung in einen den glatten Teilbereich 32 spaltfrei bedeckenden Zustand überführt und weist eine Schichtdicke von 0,5 mm auf. Das zusätzliche Isolierelement 44 bildet eine zusätzliche Isolationsschicht zwischen der Schraube 30 und dem Getriebegehäuse 46 und verhindert ferner eine Beschädigung der elektrisch isolierenden Oberflächenbeschichtung 38 im glatten Teilbereich 32 während eines Einschraubvorgangs der Schraube 30. Eine Isolierrippe 42 ist in dem Bereich des Schraublochs 52 in dem metallenen Getriebegehäuse 46 angeordnet und bildet eine zu der elektrisch isolierenden Oberflächenbeschichtung 38 zusätzliche Isolationsschicht zwischen dem Getriebegehäuse 46 und der Schraube 30. Die Isolierrippe 42 ist als vorspringender Bereich der Abdeckkappe 22 ausgebildet und bildet einen zylinderförmigen Bereich mit einer Lochung, durch die Schraube 30 hindurchgeführt ist.

Figur 3 zeigt ein schematisches Schnittbild durch eine erfindungsgemäße Schraube 30 in einer Draufsicht aus einer dem Schraubenkopf 34 abgewandten Richtung. Die Schraube 30 weist einen Schraubenkern 36 auf, der von der elektrisch isolierenden Oberflächenbeschichtung 38 umgeben ist. Eine Materialstärke der elektrisch isolierenden Oberflächenbeschichtung 38 beträgt 50 µm und ist damit wesentlich geringer als eine Materialstärke des Schraubenkerns 36. In dem glatten Teilbereich 32 der Schraube 30, welcher frei von einem Schraubengewinde ist, ist die Schraube 30 von dem zu der elektrisch isolierenden Oberflächenbeschichtung 38 zusätzlichen Isolierelement 44 umgeben.

## Patentansprüche

1. Werkzeugmaschinenvorrichtung, insbesondere Handwerkzeugmaschinenvorrichtung, mit zumindest einer Schraube (30), die dazu vorgesehen ist, zumindest ein innenliegendes Metallbauteil und zumindest ein außenliegendes Gehäusebauteil formschlüssig aneinander zu befestigen, wobei die Schraube (30) außen an dem außenliegenden Gehäusebauteil angeordnet und von einem Benutzer berührbar ist,
**gekennzeichnet durch**
eine elektrische Isoliereinheit (40), die dazu vorgesehen ist, eine Stromleitung zumindest zwischen dem innenliegenden Metallbauteil und der Schraube (30) zu verhindern.

2. Werkzeugmaschinenvorrichtung nach Anspruch 1,
**dadurch gekennzeichnet, dass**
das innenliegende Metallbauteil von einem innenliegenden Metallgehäuse gebildet ist.

3. Werkzeugmaschinenvorrichtung zumindest nach Anspruch 1,
**dadurch gekennzeichnet, dass**
die elektrische Isoliereinheit (40) zumindest eine elektrisch isolierende Oberflächenbeschichtung (38) umfasst.

4. Werkzeugmaschinenvorrichtung nach Anspruch 3,
**dadurch gekennzeichnet, dass**
die Oberflächenbeschichtung (38) aus einem elektrolytisch aufgebrachten nichtleitenden Material besteht.

5. Werkzeugmaschinenvorrichtung nach einem der vorhergehenden Ansprüche,
**dadurch gekennzeichnet dass,**
die zumindest eine Schraube (30) einen glatten Teilbereich (32) umfasst.

6. Werkzeugmaschinenvorrichtung nach Anspruch 5,
**dadurch gekennzeichnet, dass**
der glatte Teilbereich (32) an einen Schraubenkopf (34) angrenzt.

7. Werkzeugmaschinenvorrichtung nach einem der vorhergehenden Ansprüche,
**dadurch gekennzeichnet, dass**
die elektrische Isoliereinheit (40) zumindest ein zusätzliches Isolierelement (44) umfasst, das dazu vorgesehen ist, zwischen der Schraube (30) und dem Metallbauteil angeordnet zu werden.

8. Werkzeugmaschinenvorrichtung nach einem der vorhergehenden Ansprüche,
**gekennzeichnet durch**
zumindest eine Isolierrippe (42), die in einem zu einer Aufnahme der Schraube (30) vorgesehenen Schraubloch (52) in dem Metallbauteil angeordnet ist.

9. Werkzeugmaschinenvorrichtung nach einem der vorhergehenden Ansprüche,
**dadurch gekennzeichnet, dass**
das innenliegende Metallbauteil von einem Getriebegehäuse (46) und das außenliegende Gehäusebauteil von einer Abdeckkappe (22) gebildet ist.

10. Tragbare Werkzeugmaschine, insbesondere Handwerkzeugmaschine, mit einer Werkzeugmaschinenvorrichtung, insbesondere Handwerkzeugmaschinenvorrichtung, nach einem der vorhergehenden Ansprüche.

11. Tragbare Werkzeugmaschine nach Anspruch 10, **gekennzeichnet durch**
ein Winkelgetriebe.

## Claims

1. Power-tool device, in particular a hand-held power-tool device, having at least one screw (30), which is provided to fasten at least one internal metallic component and at least one external housing component to each other in a form-fitting manner, wherein the screw (30) is disposed on the outside on the external housing component and can be contacted by a user,
**characterized by**
an electrical insulating unit (40), which is provided to prevent conduction of current, at least between the internal metallic component and the screw (30).

2. Power-tool device according to Claim 1,
**characterized in that**
the internal metallic component is constituted by an internal metallic housing.

3. Power-tool device at least according to Claim 1,
**characterized in that**
the electrical insulating unit (40) comprises at least one electrically insulating surface coating (38).

4. Power-tool device according to Claim 3,
**characterized in that**
the surface coating (38) is composed of a nonconducting material applied electrolytically.

5. Power-tool device according to any one of the preceding claims,
**characterized in that**
the at least one screw 30) comprises a smooth partial region (32).

6. Power-tool device according to Claim 5,
**characterized in that**
the smooth partial region (32) adjoins a screw head (34).

7. Power-tool device according to any one of the preceding claims,
**characterized in that**
the electrical insulating unit (40) comprises at least one additional insulating element (44), which is provided to be disposed between the screw (30) and the metallic component.

8. Power-tool device according to any one of the preceding claims,
**characterized by**
at least one insulating rib (42), which is disposed in a screw hole (52) in the metallic component that is provided to receive the screw (30).

9. Power-tool device according to any one of the preceding claims,
**characterized in that**
the internal metallic component is constituted by a transmission housing (46), and the external housing component is constituted by a cover cap (22).

10. Portable power tool, in particular a hand-held power tool, having a power-tool device, in particular a hand-held power tool device, according to any one of the preceding claims.

11. Portable power tool according to Claim 10,
**characterized by**
a bevel gear transmission.

## Revendications

1. Dispositif de machine-outil, notamment dispositif de machine-outil portative, comprenant au moins une vis (30) qui est conçue pour fixer ensemble par complémentarité de formes au moins un élément structural métallique intérieur et au moins un élément structural de boîtier extérieur, la vis (30) étant disposée à l'extérieur sur l'élément structural de boîtier extérieur et pouvant être touchée par un utilisateur,
**caractérisé par**
une unité isolante électrique (40) qui est conçue pour empêcher un passage du courant au moins entre l'élément structural métallique intérieur et la vis (30).

2. Dispositif de machine-outil selon la revendication 1, **caractérisé en ce que** l'élément structural métallique intérieur est formé par un boîtier métallique intérieur.

3. Dispositif de machine-outil selon au moins la revendication 1, **caractérisé en ce que** l'unité isolante électrique (40) comporte au moins un revêtement de surface (38) électriquement isolant.

4. Dispositif de machine-outil selon la revendication 3, **caractérisé en ce que** le revêtement de surface (38) se compose d'un matériau non conducteur appliqué par procédé électrolytique.

5. Dispositif de machine-outil selon l'une des revendications précédentes, **caractérisé en ce que** l'au moins une vis (30) comporte une zone partielle lisse (32).

6. Dispositif de machine-outil selon la revendication 5, **caractérisé en ce que** la zone partielle lisse (32) est adjacente à une tête de vis (34).

7. Dispositif de machine-outil selon l'une des revendications précédentes, **caractérisé en ce que** l'unité isolante électrique (40) comporte au moins un élément isolant (44) supplémentaire qui est conçu pour être disposé entre la vis (30) et l'élément structural métallique.

8. Dispositif de machine-outil selon l'une des revendications précédentes, **caractérisé par** au moins une nervure isolante (42) qui est disposée dans un trou de vis (52) conçu pour accueillir la vis (30) dans l'élément structural métallique.

9. Dispositif de machine-outil selon l'une des revendications précédentes, **caractérisé en ce que** l'élément structural métallique intérieur est formé par un carter d'engrenage (46) et l'élément structural de boîtier extérieur par un capot de protection (22).

10. Machine-outil portable, notamment machine-outil portative, comprenant un dispositif de machine-outil, notamment un dispositif de machine-outil portative selon l'une des revendications précédentes.

11. Machine-outil, portable selon la revendication 10, **caractérisée par** on renvoi d'angle.
